# EUROPÄISCHE PATENTSCHRIFT

(11) **EP 1 711 918 B1**
(45) Veröffentlichungstag und Bekanntmachung des Hinweises auf die Patenterteilung: **15.08.2007**
(21) Anmeldenummer: 04798073.5
(22) Anmeldetag: 25.11.2004
(51) Int. Cl.: G06Q 90/00, H04L 12/56

(54) **VERFAHREN UND VORRICHTUNG ZUR ÜBERWACHUNG DES DATENAUSTAUSCHES ZWISCHEN ANWENDUNGSSYSTEMEN**
METHOD AND DEVICE FOR MONITORING THE EXCHANGE OF DATA BETWEEN APPLICATION SYSTEMS
PROCEDE ET DISPOSITIF POUR SURVEILLER L'ECHANGE DE DONNEES ENTRE DES SYSTEMES D'APPLICATIONS

(30) Priorität: 08.01.2004 DE 102004001323
(43) Veröffentlichungstag der Anmeldung: 18.10.2006
(73) Patentinhaber: Conxpert Holding GmbH, 28359 Bremen (DE)
(72) Erfinder: MEENTZEN, Christian, W., 28879 Grasberg (DE); MONSEES, Marco, 28203 Bremen (DE)
(74) Vertreter: Eisenführ, Günther
(86) Internationale Anmeldenummer: PCT/EP2004/013358
(87) Internationale Veröffentlichungsnummer: WO 2005/066854

(56) Entgegenhaltungen:
- EP-A- 1 286 283
- WO-A-02/19127
- US-A1- 2001 042 131
- US-A1- 2003 053 459

## Beschreibung

Die vorliegende Erfindung betrifft ein Verfahren und ein entsprechendes Überwachungssystem zur Überwachung des Datenaustausches zwischen Anwendungssystemen. Ferner betrifft die Erfindung eine Überwachungseinheit zur Verwendung in einem solchen Überwachungssystem sowie ein von dieser Überwachungseinheit durchgeführtes Überwachungsverfahren. Schließlich betrifft die Erfindung auch ein Computerprogramm zur Umsetzung dieses Verfahrens auf einem Computer. '

Viele Unternehmen implementieren zunehmend einen elektronischen Datenaustausch untereinander, um eine bessere Effizienz in der Kommunikation zu erhalten und somit die Fehlerquote zu reduzieren, die bei den bisher zumeist verwendeten Methoden, wie beispielsweise dem Austausch von Daten per Telefon, Fax oder Post, auftreten. In der Regel werden hierbei eine Vielzahl von internen und externen Softwareprodukten und Dienstleistern benötigt, um die Verbindung zwischen dem eigenen Anwendungssystem, das beispielsweise ein Datenpaket absenden will, und externen, zumeist ganz anderen ausgestalteten Anwendungssystemen, die das versendete Datenpaket empfangen und verarbeiten sollen, herzustellen. Es existieren am Markt diverse Produkte, die in einer derartigen Konstellation in erster Linie die Formaterkennung, Formatvalidierung sowie Umwandlungsprozesse vornehmen und für den Empfang bzw. den Versand von Datenpaketen erforderlich sind, wobei ein Datenpaket grundsätzlich jede Art von. Daten oder Informationen enthalten kann. Diese Softwarepredukte oder Dienstleister sichern allerdings allenfalls die Kommunikation bis zum jeweils in der Kette nächsten Anwendungssystem, also beispielsweise Softwaremodul oder Dienstleister.

Sehr häufig sind diese Datenpakete nicht nur für ein einziges Anwendungssystem relevant, sondern für mehrere Anwendungssysteme innerhalb eines Unternehmens. Hieraus sind Produkte aus dem Bereich Enterprise Application Integration (EAI) entstanden, die zusätzlich in der Lage sind, Prozesse (Workflows) innerhalb eines Unternehmens abzubilden.

US 2003/0053459 A1 beschreibt ein Verfahren zum Datenaustausch zwischen Anwendungssystemen. Darin kann der Absender einer Nachricht eine maximale Transaktionszeit für die Übermittlung der Nachricht angeben. Der Empfänger sendet eine Kontrollmitteilung über den Erhalt der Nachricht an das Übermittlungssystem. Trifft diese Kontrollnachricht nicht innerhalb der vorgegebenen Transaktionszeit ein, so wird die Nachricht verworfen und der Absender informiert. Diese Lösung der Überwachung des Datenaustausches basiert auf einem eigenen System zur Übermittlung von Nachrichten zwischen Anwendungssystemen, in denen die Überwachungsfunktionen enthalten sind.

Der vorliegenden. Erfindung liegt die Aufgabe zugrunde, ein Verfahren zur Überwachung des Datenaustausches zwischen Anwendungssystemen sowie ein entsprechendes Überwachungssystem und eine Überwachungseinheit anzugeben, mit denen Unternehmen auf einfache Art und Weise eine Transaktionssicherheit für Geschäftsprozesse über die Unternehmensgrenzen und über mehrere Softwareprodukte und Dienstleister sowie Anwendungssysteme hinaus gewährleistet werden kann.

Diese Aufgabe wird gelöst durch ein Verfahren gemäß Anspruch 1 mit den Schritten:
- Übermittlung einer Absende-Kohtrollhachricht von einem ersten Anwendungssystem an eine separate Überwachungseinheit nach Absendung eines Datenpakets von dem ersten Anwendungssystem an ein zweites Anwendungssystem,
- Erstellung einer Empfangs-Kentrellnachrjchtvon dem zweiten Anwendungssystem nach erfolgreichem Empfang des Datenpakets durch das zweite Anwendungssystem und
- Ausgabe einer Überwachungsnachricht von der Überwachungseinheit enthaltend eine Information, ob das Datenpaket von dem zweiten Anwendungssystem erfolgreich und innerhalb einer vorbestimmten Transaktionszeit empfangen wurde.

Ein entsprechendes Überwachungssystem ist in Anspruch 10 angegeben. Die Erfindung betrifft ferner eine Überwachungseinheit zur Verwendung in einem solchen Überwachungssystem mit:
- einer Empfangseinheit zum Empfang einer Absende-Kontrollnachricht von einem ersten Anwendungssystem nach Absendung eines Datenpakets von dem ersten Anwendungssystem an ein zweites Anwendungssystem
- einer Prüfeinheit zur Prüfung einer von dem zweiten Anwendungssystem nach erfolgreichem Empfang des Datenpakets erstellten Empfangs-Kontrollnachricht,
- einer Verarbeitungseinheit zur Prüfung, ob das Datenpaket von dem zweiten Anwendungssystem erfolgreich und innerhalb einer vorbestimmten Transaktionszeit empfangen wurde, anhand der Absende-Kontrollnachricht und Empfangs-Kontrollnachricht und zur Erstellung einer entsprechenden Überwachungsnachricht und
- einer Ausgabeeinheit zur Ausgabe der Überwachungsnachricht.

Ein entsprechendes, von dieser Überwachungseinheit vorzugsweise durchgeführtes Verfahren zur Überwachung des Datenaustausches zwischen Anwendungssystemen ist in Anspruch 13 angegeben. Ein Computerprogramm zur Umsetzung dieses Verfahrens auf einem Computer ist in Anspruch 14 angegeben.

Der Erfindung liegt der Gedanke zugrunde, neben den an dem Datenaustausch beteiligten Anwendungssystemen eine separate Überwachungseinheit zu schaffen, deren Aufgabe es ist zu prüfen, ob ein von einem ersten Anwendungssystem abgesandtes Datenpaket auch erfolgreich und innerhalb einer vorbestimmten Transaktionszeit von dem gewünschten Empfänger empfangen worden ist. Sofern dies nicht der Fall ist, wird von der Überwachungseinheit eine entsprechende Fehlermeldung erstellt und ausgegeben, so dass geprüft werden kann, weshalb dieser Fehler aufgetreten ist, und eine nochmalige Versendung veranlasst werden kann. Die Prüfung durch die Überwachungseinheit findet anhand von Kontrollnachrichten statt, die zumindest das absendende als auch das empfangende Anwendungssystem an die Überwachungseinheit senden oder alternativ, was die Empfangs-Kontrollnachrichten betrifft, in dem empfangenden Anwendungssystem gespeichert sind und von der Überwachungseinheit periodisch geprüft werden.

Bevorzugt ist vorgesehen, dass die Überwachungseinheit in jedem Fall, also sowohl bei positivem als auch bei negativem Prüfungsergebnis, eine Überwachungsnachricht erstellt und bevorzugt an das absendende Anwendungssystem übermittelt. Es kann jedoch auch vorgesehen sein, dass nur im Falle eines negativen Prüfungsergebnisses eine entsprechende Überwachungsnachricht erstellt und ausgegeben wird.

Die Erfindung ermöglicht es, mit großer Sicherheit festzustellen, ob eine Transaktion eines Datenpakets zwischen Anwendungssystemen korrekt und wie vorgesehen erfolgt ist. Insbesondere ist dies von Bedeutung, wenn, wie in einer bevorzugten Ausgestaltung vorgesehen ist, das erste und zweite Anwendungssystem nicht direkt miteinander verbunden sind, sondern insbesondere über mindestens ein weiteres Anwendungssystem und/oder Übertragungssystem indirekt miteinander verbunden sind. Vor allem für Geschäftsprozesse über Unternehmensgrenzen hinweg ist die Erfindung vorteilhaft, da es dann sehr häufig vorkommt, dass die beiden Anwendungssysteme völlig unterschiedlich sind, insbesondere unterschiedliche Datenprotokolle verwenden, und dann häufig nicht festgestellt werden kann, ob eine Transaktion erfolgreich und innerhalb einer vorbestimmten Transaktionszeit erfolgt ist.

Besonders oft kommt es auch vor, dass zwischen dem absendenden und dem empfangenden Anwendungssystem eine Kette weiterer Systeme liegt. Um in einem solchen Fall eine noch höhere Kontrolle der Transaktion und eine noch höhere Transaktionssicherheit zu erreichen, ist in einer Ausgestaltung vorgesehen, dass auch die das erste und zweite Anwendungssystem verbindenden Anwendungs- und Übertragungssysteme Empfangs- und/oder Absende-Kontrollnachrichten nach erfolgreichem Empfang bzw. Absenden des Datenpakets erstellen, die dann von der Überwachungseinheit geprüft werden können. In einer solchen Kette von Systemen kann somit genau überwacht werden, wo ggf. ein Fehler auftritt, so dass dieser Fehler dann ggf. auch leichter korrigiert werden kann. Hierdurch kann insbesondere auch eine bessere Eingrenzungsmöglichkeit des Fehlers (immer auch vor dem Hintergrund von Folgeschäden, wie z. B. Produktionsstillstand durch Nicht-Übermittlung einer Bestellung, etc.) erreichen.

In einer Weiterbildung der Erfindung ist vorgesehen, dass in der Überwachungseinheit die Übermittlung von Datenpaketen betreffende Regeln vorbestimmt sind, in denen vorgegeben ist, welche Punkte von der Überwachungseinheit anhand der Absende- und Empfangs-Kontrollnachrichten zu überwachen sind. Derartige Regeln können bevorzugt von den Anwendern frei definiert werden. So kann beispielsweise darin definiert sein, wie groß die Transaktionszeit insgesamt bzw. zwischen benachbarten Anwendungssystemen maximal sein darf und welche Systeme in einer Kette von beteiligten Systemen Kontrollnachrichten erwartungsgemäß verschicken. Ferner kann in solchen Regeln der Benachrichtigungsmodus durch die Überwachungseinheit festgelegt werden, also wer wie informiert werden muss, sofern eine bestimmte Regel nicht eingehalten wird.

In einer Weiterbildung ist ferner vorgesehen, dass in den Regeln für verschiedene Arten von Datenpaketen zu treffende Maßnahmen bei negativem Ergebnis von zu überwachenden Punkten, maximale Transaktionszeit, Übermittlungswege und/oder Anwendungssysteme, von denen Kontrollnachrichten erwartet werden, vorgegeben sind. Allerdings ist nicht zwingend erforderlich, dass die Regeln in der Überwachungseinheit vorbestimmt sind. Es ist alternativ auch möglich, dass das absendende Anwendungssystem, das eine Absende-Kontrollnachricht an die Überwachungseinheit übermittelt, gleichzeitig damit auch die entsprechende Überwachungsregel zur Verwendung durch die Überwachungseinheit mitschickt.

Grundsätzlich ist es möglich, dass für jedes einzelne Datenpaket eine entsprechende Überwachung erfolgt. Insbesondere wenn jedoch eine Vielzahl von zusammengehörigen Datenpaketen von einem Absender an den gleichen Empfänger nacheinander versandt wird, ist es vorteilhaft, dass die Überwachung quasi nur stichprobenhaft oder nur bei einzelnen Datenpaketen erfolgt.

Wie bereits erwähnt, ist bevorzugt vorgesehen, dass die Empfangs-Kontrollnachrichten von dem zweiten Anwendungssystem an die Überwachungseinheit übermittelt werden. Alternativ kann jedoch auch vorgesehen sein, dass die Empfangs-Kontrollnachrichten in dem zweiten Anwendungssystem, beispielsweise in einer gesonderten Datenbank, gespeichert werden und die Überwachungseinheit die gespeicherten Empfangs-Kontrollnachrichten periodisch überwacht.

Die von der Überwachungseinheit erstellte Überwachungsnachricht wird bevorzugt an das erste Anwendungssystem übermittelt, damit dieses unmittelbar Kenntnis von einem Übertragungsfehler bekommt und dieser behoben werden kann. Die Überwachungsnachricht kann aber auch an einen mit dem ersten Anwendungssystem verbundenen Dienstleister oder einen Benutzer des ersten Anwendungssystem, z.B. einen Mitarbeiter des entsprechenden Unternehmens, z.B. per Email oder SMS, übermittelt wird.

Die Erfindung wird nachfolgend anhand der Zeichnungen näher erläutert. Es zeigen:
- Fig. 1: ein Blockschaltbild zur Erläuterung der bekannten Kommunikation zwischen zwei Anwendungssystemen,
- Fig. 2: ein Blockschaltbild einer Kette von Anwendungssystemen zur Erläuterung des der Erfindung zugrundeliegenden Problems,
- Fig. 3: ein Blockschaltbild mit mehreren, unterschiedlichen Unternehmen zugeordneten Anwendungssystemen,
- Fig. 4 bis 6: ein Blockschaltbild des erfindungsgemäßen Überwachungssystems zur Erläuterung der Schritte des erfindungsgemäßen Überwachungsverfahrens,
- Fig. 7: ein Blockschaltbild einer weiteren Ausgestaltung des erfindungsgemäßen Überwachungssystems und
- Fig. 8: ein Blockschaltbild noch einer weiteren Ausgestaltung des erfindungsgemäßen Überwachungssystems.

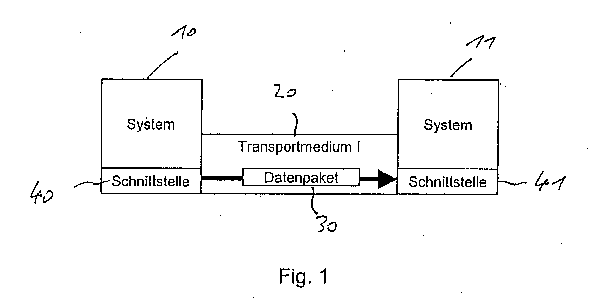

Fig. 1 zeigt zwei direkt über ein Transportmedium 20 miteinander verbundene Anwendungssysteme 10, 11, zwischen denen Daten elektronisch als Datenpakete 30 ausgetauscht werden sollen. Die Anwendungssysteme 10, 11, also beispielsweise Softwaresysteme oder Dienstleister, haben meist eine definierte Schnittstelle 40, 41, die dafür Sorge trägt, dass die beiden Anwendungssysteme 10, 11 Daten im gültigen Format untereinander austauschen können.

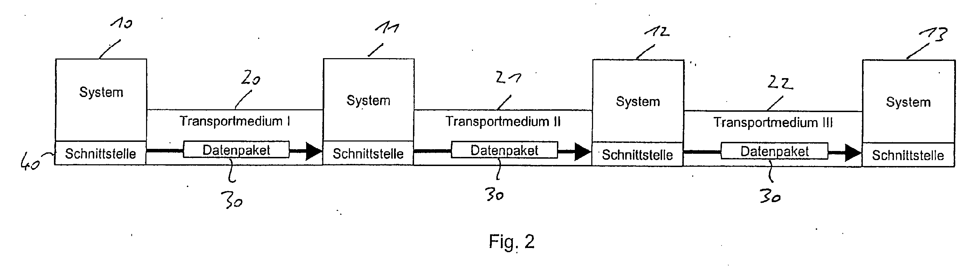

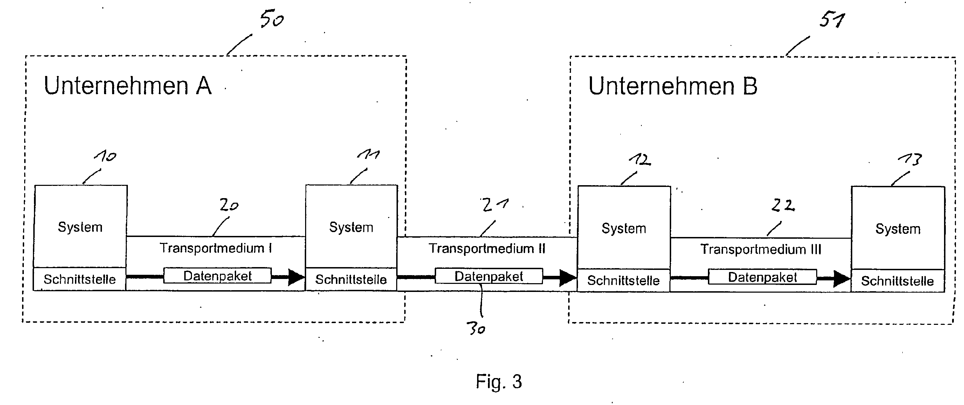

Diese Schnittstellen 40, 41 sind immer anwendbar zwischen genau zwei Anwendungssystemen. Sobald jedoch mehrere Anwendungssysteme für einen Prozess notwendig sind, wie dies in Fig. 2 veranschaulicht ist, kann die Schnittstelle 40 des ein Datenpaket 30 absendenden Anwendungssystems 10 insbesondere bei asynchroner Verbindung zwischen den Anwendungssystemen 10-13 nicht sicherstellen, ob das Datenpaket 30 auch im vorgesehenen Empfangs-Anwendungssystem 13 verarbeitet werden konnte bzw. ob es überhaupt und ggf. innerhalb einer maximal vorgegebenen Transaktionszeit bis dorthin gelangt ist. Dieses Problem kann in Teilbereichen noch innerhalb einer sogenannten EAI-Software gelöst werden. Überschreitet die Kette der Anwendungssysteme (10-13 in Fig. 2) jedoch die Unternehmensgrenzen, wie dies in Fig. 3 veranschaulicht ist, wo die Anwendungssysteme 10 und 11 einem ersten Unternehmen 50 und die Anwendungssysteme 12 und 13 einem zweiten Unternehmen 51 zugeordnet sind, so sind auch die am Markt erhältlichen Produkte nicht mehr geeignet, eine Transaktionssicherheit zu gewährleisten oder überhaupt die erfolgreiche Durchführung einer Transaktion zu überprüfen.

Es sei an dieser Stelle erwähnt, dass die die einzelnen Anwendungssysteme 10 bis 13 verbindenden Transportmedien 20, 21, 22 sowohl identisch als auch völlig unterschiedlich sein können, also beispielsweise andere Übertragungsraten und Datenformate verwenden.

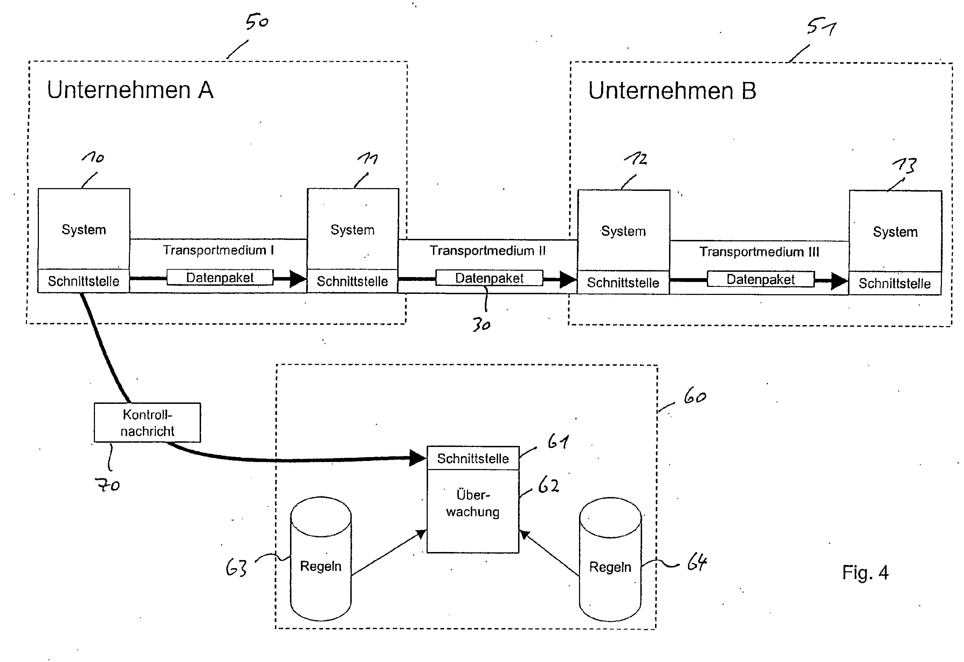

Ein erfindungsgemäßes Überwachungssystem ist in den Figuren 4 bis 6 als Blockschaltbild näher gezeigt. Darin sind jeweils die einzelnen Schritte des Überwachungsverfahrens dargestellt, die nachfolgend erläutert werden sollen. Unabhängig von den den einzelnen Unternehmen 50, 51 zugeordneten Anwendungssystemen 10 bis 13 ist in dem erfindungsgemäßen Überwachungssystem eine separate Überwachungseinheit 60, beispielsweise ein bei einem Dienstleister angeordneter Server, vorgesehen. Diese weist eine Schnittstelle 61 zum Empfang von Kontrollnachrichten von den Anwendungssystemen sowie zur Ausgabe von Überwachungsnachrichten auf. Weiter ist eine Verarbeitungseinheit 62 vorgesehen, die anhand der Kontrollnachrichten die erfolgreiche Durchführung der Übermittlung eines Datenpakets überprüft und eine entsprechende Überwachungsnachricht erzeugt. Ferner sind Speichereinheiten 63, 64 vorgesehen, in denen Regeln für diese Überprüfung gespeichert sind, die beispielsweise von Anwendern der zugeordneten Anwendungssysteme vordefiniert sind.

Als Beispiel soll nachfolgend erläutert werden, welche Schritte erfindungsgemäß vorgesehen sind, um die Übermittlung eines Datenpakets 30 von dem Anwendungssystem 10 bei dem ersten Unternehmen 50 über Anwendungssysteme 11 und 12 zu dem Anwendungssystem 13 bei dem zweiten Unternehmen 51 zu überwachen. In Fig. 4 ist dazu der erste Schritt dargestellt, wonach nach dem Absenden des Datenpakets 30 von dem Anwendungssystem 10 eine Absende-Kontrollnachricht 70 an die Empfangseinheit 61 der Überwachungseinheit 60 versendet wird. Dadurch wird ein zu der Übertragung des Datenpakets 30 paralleler Prozess in Gang gestoßen. Dieser Prozess ist im Vorfeld von den beteiligten Unternehmen 50 und 51 definiert worden und mit bestimmten Regeln versehen, die in den Speichereinheiten 63 (insbesondere für das Anwendungssystem 10) und 64 (insbesondere für das Anwendungssystem 13) gespeichert sind. Dies bedeutet, dass die gesamte Kette der Anwendungssysteme 10 bis 13 und/oder Dienstleistern, die zwischen dem absendenden Anwendungssystem 10 und dem vorgesehenen Empfänger-Anwendungssystem 13 stehen, somit direkt oder indirekt auf ihre Funktion und Arbeitsweise überprüft werden.

Für eine direkte Überprüfung ist somit als weiterer Schritt vorgesehen, dass auch die Anwendungssysteme 11 und 12 jeweils Empfangs- und/oder Absende-Kontrollnachrichten an die Überwachungseinheit 60 übermitteln, wenn das Datenpaket erfolgreich empfangen bzw. erfolgreich weitversendet wurde. Bei einer indirekten Überprüfung wird nicht von jedem Anwendungssystem zwingend eine Kontrollnachricht an die Überwachungseinheit 60 übersandt, sondern nur einzelne Anwendungssysteme übersenden entsprechende Kontrollnachrichten an die Überwachungseinheit 60. Wenn also beispielsweise das Anwendungssystem 12 eine positive Empfangs-Kontrollnachricht an die Überwachungseinheit 60 sendet, wird davon ausgegangen, dass auch das Anwendungssystem 11 fehlerfrei gearbeitet hat.

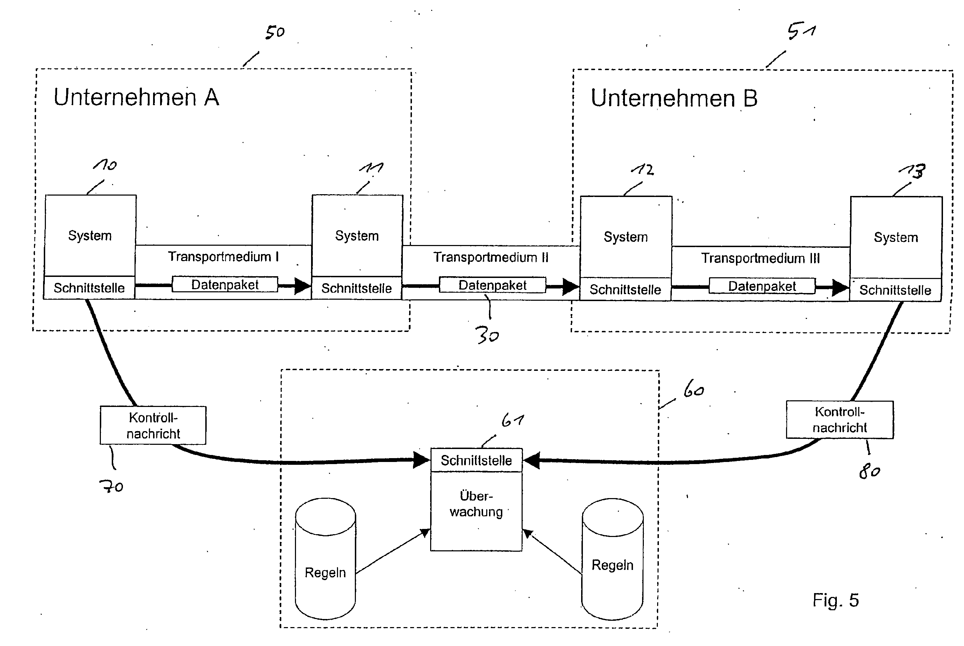

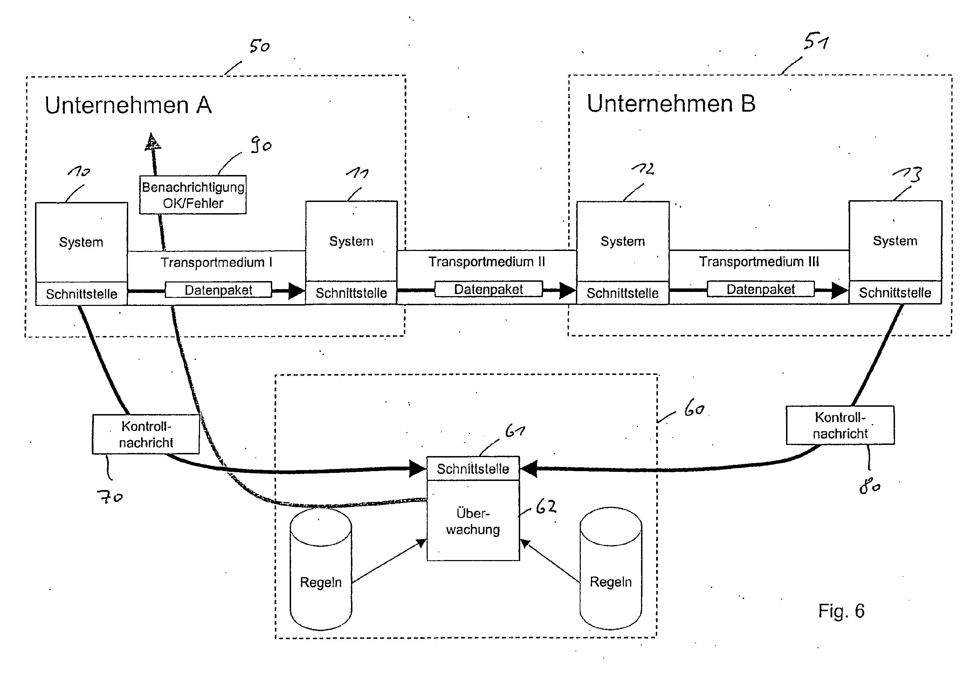

In Fig. 5 ist als weiterer Schritt gezeigt, dass das als Empfänger vorgesehene Anwendungssystem 13 nach Empfang des Datenpakets 30 eine Empfangs-Kontrollnachricht 80 an die Empfangseinheit 61 der Überwachungseinheit 60 übermittelt. Diese kann eine Information enthalten, ob das Datenpaket 30 fehlerfrei und zu welchem Zeitpunkt empfangen worden ist. Die Überwachungseinheit wartet dazu bevorzugt innerhalb bestimmter Toleranzgrenzen auf eine derartige Empfangs-Kontrollnachricht. Ist diese Nachricht negativ oder bleibt sie innerhalb der Toleranzgrenzen (also beispielsweise 30 Sekunden nach dem Versenden aus Anwendungssystem 10) aus, was von der Verarbeitungseinheit 62 geprüft wird, so wird von der Verarbeitungseinheit 62 eine entsprechende Überwachungsnachricht 90 erzeugt, die beispielsweise dem absendenden Anwendungssystem 10 bzw. dem zugehörigen Unternehmen 50 zugestellt wird, wie in Fig. 6 gezeigt ist.

In dieser Überwachungsnachricht 90 kann auch eine Information enthalten sein, an welcher Stelle und/oder welcher Fehler bei der Übermittlung des Datenpakets aufgetreten ist, damit geeignete Maßnahmen getroffen werden können. Darüber hinaus kann auch das vorgesehene Empfänger-Anwendungssystem 13 bzw. das zugehörige Unternehmen 51 eine entsprechende Überwachungsnachricht erhalten. Ferner kann das Anwendungssystem 10 automatisch aufgefordert werden, das Datenpaket erneut auf gleichem Wege zu versenden. Es kann auch ein weiterer "Regelbaum" angestoßen werden, wenn Alternativen möglich sind.

Zum Beispiel kann das Absendesystem 10 zwei alternative Zieladressen erhalten (weil beispiels das Zielsystem LoadBalancing oder ein automatisches FailOver-System betreibt), die je nach Erreichbarkeit der Zielsysteme verwendet werden.

Wird nun prioritär die erste Zieladresse negativ geprüft, kann mit Anstoß eines weiteren Regelbaums die zweite Zieladresse positiv geprüft werden. Dieses Beispiel verwendet die aktive, periodische Prüfung des Zielsystems; bei Übermittlung einer Empfangsnachricht würde dieses Beispiel wenig Sinn machen, da es für den Prozess in der Praxis nicht entscheidend wäre, ob die Nachricht vom ersten oder zweiten Zielsystem generiert wurde.

Die gesamte Kette der Anwendungssysteme ist an allen Stellen beliebig erweiterbar, d.h. oft sind innerhalb von Unternehmen nicht nur zwei Anwendungssysteme beteiligt, sondern eine Vielzahl von ggf. auch noch unterschiedlichen Anwendungssystemen. Der Datenaustausch muss sich auch nicht auf zwei Unternehmen beschränken, sondern es werden oft auch Dienstleistungsunternehmen und Clearing-Center, die die Konvertierung von Daten zwischen verschiedenen Systemen vornehmen, als Datenvermittler eingesetzt. Zudem gibt es die Möglichkeit, wie bereits erwähnt, Zwischenschritte in gleicher Weise zu überwachen, also zum Beispiel von jeder Zwischenstation eine Empfangs-Kontrollnachricht abzusenden und durch die Überwachungseinheit zu überwachen.

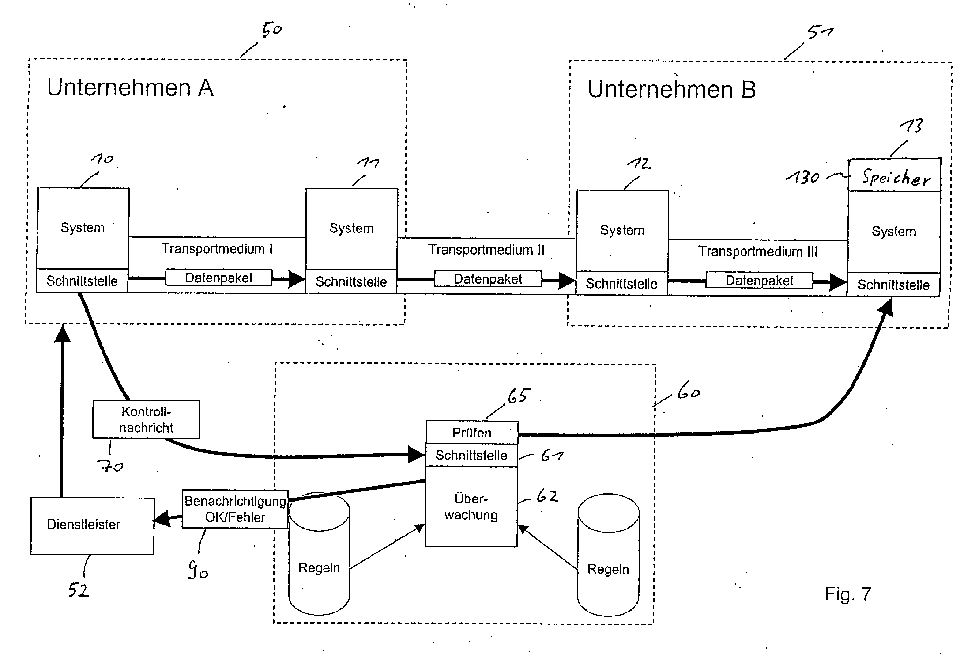

Ferner müssen die Empfangs-Kontrollnachrichten nicht zwangsläufig an die Überwachungseinheit gesandt werden, sondern es kann in einer weiteren, in Fig. 7 skizzierten Ausgestaltung vorgesehen sein, dass die Überwachungseinheit mittels einer Prüfeinheit 65 die in er Datenbank 130 in dem Anwendungssystem 13 gespeicherten Empfangs-Kontrollnachrichten aktiv und periodisch überprüft. Ferner muss die Überwachungsnachricht nicht zwangsläufig an das erste Anwendungssystem 10 gesandt werden, sondern kann auch an einen separaten, mit dem ersten Anwendungssystem 10 verbundenen Dienstleister oder einen Mitarbeiter 52, z.B. per Email oder SMS, erfolgen, der dann geeignete Maßnahmen zur Behebung eines Fehlers treffen kann.

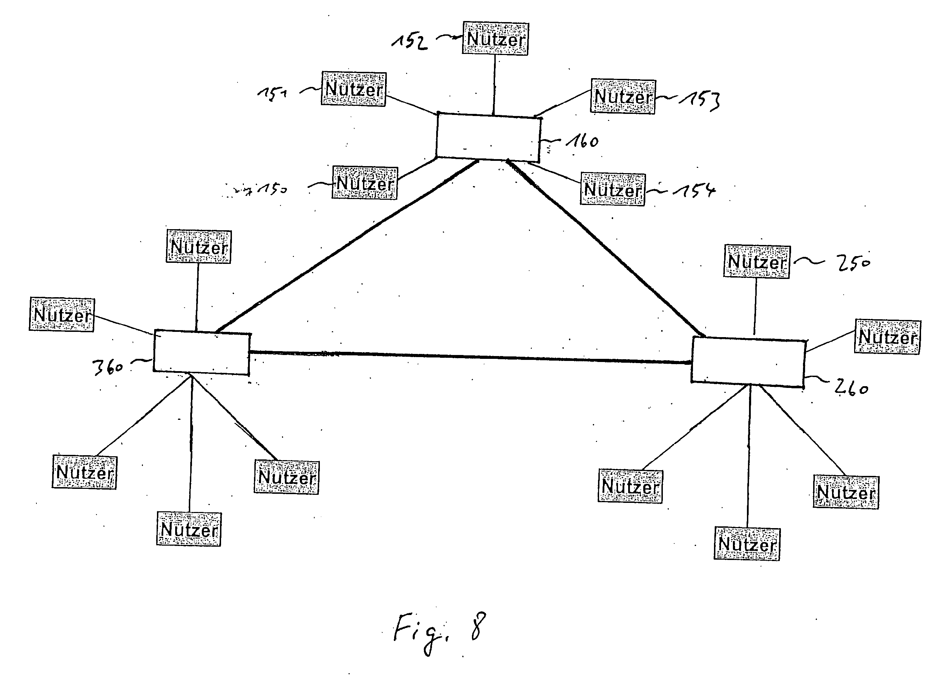

Noch eine weitere Ausgestaltung des erfindungsgemäßen Überwachungssystems zeigt Fig. 8. Dabei sind mehrere (vorliegend drei) Überwachungseinheiten 160, 260, 360 vorgesehen, die unabhängig voneinander durch verschiedene Dienstleister betrieben werden. An jede Überwachungseinheit 160, 260, 360 sind mehrere Nutzer (Unternehmen) angeschlossen, beispielsweise die Nutzer 150-154 an die Überwachungseinheit 160. Ein Unternehmen muss nur bei "seiner" Überwachungseinheit bekannt sein und kann trotzdem Quittungen an Unternehmen senden, die bei einer anderen Überwachungseinheit bekannt sind. Ein Beispiel hierfür ist: Unternehmen 150 ist bei Überwachungseinheit 160 bekannt und stellt dort eine Überwachungsnachricht für Unternehmen 250, welches bei Überwachungseinheit 260 bekannt ist, ein. Unternehmen 260 sendet nun die Quittung an Überwachungseinheit 260. Diese stellt fest, dass die Nachricht auf Überwachungseinheit 160 gespeichert ist bzw. ausgewertet werden muss und leitet diese an Überwachungseinheit 160 weiter.

Durch die Erfindung wird eine Möglichkeit geschaffen zu überprüfen, ob die Transaktion eines Datenpakets von einem ersten Anwendungssystem zu einem zweiten Anwendungssystem erfolgreich und innerhalb einer vorgegebenen Transaktionszeit erfolgt ist, auch wenn zwischen den beiden Anwendungssystemen eine Reihe weiterer Anwendungssysteme liegen, die beteiligten Anwendungssysteme unterschiedlicher Art sind und unterschiedlichen Unternehmen zugeordnet sind.

## Patentansprüche

1. Verfahren zur Überwachung des Datenaustausches zwischen Anwendungssystemen (10-13) mit den Schritten:
- Übermittlung einer Absende-Kontrolinachricht (70) von einem ersten Anwendungssystem (10) an eine separate Überwachungseinheit (60) nach Absendung eines Datenpakets von dem ersten Anwendungssystem (10) an ein zweites Anwendungssystem (13),
- Erstellung einer Empfangs-Kontrolinachricht (80) von dem zweiten Anwendungssystem (13) nach erfolgreichem Empfang des Datenpakets durch das zweite Anwendungssystem (13) und
- Ausgabe einer Überwachungsnachricht (90) von der Überwachungseinheit (60) enthaltend eine Information, ob das Datenpaket von dem zweiten Anwendungssystem (13) erfolgreich und innerhalb einer vorbestimmten Transaktionszeit empfangen wurde.

2. Verfahren nach Anspruch 1,
**dadurch gekennzeichnet, dass** das erste und zweite Anwendungssystem (10, 13) nicht direkt miteinander verbunden sind, sondern insbesondere über mindestens ein weiteres Anwendungssystem (11, 12) und/oder Übertragungssystem indirekt miteinander verbunden sind.

3. Verfahren nach Anspruch 2,
**dadurch gekennzeichnet, dass** auch die das erste und zweite Anwendungssystem (10, 13) verbindenden Anwendungs- und Übertragungssysteme (11, 12) Empfangs- und/oder Absende-Kontrollnachrichten nach erfolgreichem Empfang bzw. Absenden des Datenpakets erstellen und insbesondere an die Überwachungseinheit (60) übermitteln.

4. Verfahren nach einem der vorstehenden Ansprüche,
**dadurch gekennzeichnet, dass** das erste und zweite Anwendungssystem (10, 13) unterschiedliche Anwendungssysteme sind, insbesondere unterschiedliche Datenprotokolle verwenden.

5. Verfahren nach einem der vorstehenden Ansprüche,
**dadurch gekennzeichnet, dass** in der Überwachungseinheit (60) die Übermittlung von Datenpaketen betreffende Regeln vorbestimmt sind, in denen vorgegeben ist, welche Punkte von der Überwachungseinheit (60) anhand der Absende- und Empfangs-Kontrollnachrichten (70, 80) zu überwachen sind.

6. Verfahren nach Anspruch 5,
**dadurch gekennzeichnet, dass** in den Regeln für verschiedene Arten von Datenpaketen zu treffende Maßnahmen bei negativem Ergebnis von zu überwachenden Punkten, maximale Transaktionszeiten, Übermittlungswege und/oder Anwendungssysteme, von denen Kontrollnachrichten (70, 80) erwartet werden, vorgegeben sind.

7. Verfahren nach einem der vorstehenden Ansprüche,
**dadurch gekennzeichnet, dass** die Empfangs-Kontrollnachrichten (80) von dem zweiten Anwendungssystem (13) an die Überwachungseinheit (60) übermittelt werden.

8. Verfahren nach einem der Ansprüche 1 bis 7,
**dadurch gekennzeichnet, dass** die Empfangs-Kontrollnachrichten (80) in dem zweiten Anwendungssystem (13) gespeichert werden und die Überwachungseinheit (60) die gespeicherten Empfangs-Kontrollnachrichten (80) periodisch überwacht.

9. Verfahren nach einem der vorstehenden Ansprüche,
**dadurch gekennzeichnet, dass** die Überwachungsnachricht (90) an das erste Anwendungssystem (10), einen mit dem ersten Anwendungssystem (10) verbundenen Dienstleister oder einem Benutzer des ersten Anwendungssystems (10) übermittelt wird.

10. Überwachungssystem zur Überwachung des Datenaustausches zwischen Anwendungssystemen (10-13) mit:
- einem ersten Anwendungssystem (10) zur Übermittlung einer Absende-Kontrollnachricht (70) an eine separate Überwachungseinheit (60) nach Absendung eines Datenpakets von dem ersten Anwendungssystem (10) an ein zweites Anwendungssystem (13),
- einem zweiten Anwendungssystem (13) zur Erstellung einer Empfangs-Kontrollnachricht (80) nach erfolgreichem Empfang des Datenpakets und
- einer Überwachungseinheit (60) zur Ausgabe einer Überwachungsnachricht (90) enthaltend eine Information, ob das Datenpaket von dem zweiten Anwendungssystem (13) erfolgreich und innerhalb einer vorbestimmten Transaktionszeit empfangen wurde.

11. Überwachungseinheit (60) zur Verwendung in einem Überwachungssystem nach Anspruch 10 mit:
- einer Empfangseinheit (61) zum Empfang einer Absende-Kontrollnachricht (70) von einem ersten Anwendungssystem (10) nach Absendung eines Datenpakets von dem ersten Anwendungssystem (10) an ein zweites Anwendungssystem (13),
- einer Prüfeinheit (62) zur Prüfung einer von dem zweiten Anwendungssystem (13) nach erfolgreichem Empfang des Datenpakets erstellten Empfangs-Kontrollnachricht (80),
- einer Verarbeitungseinheit (62) zur Prüfung, ob das Datenpaket von dem zweiten Anwendungssystem (13) erfolgreich und innerhalb einer vorbestimmten Transaktionszeit empfangen wurde, anhand der Absende-Kontrollnachricht (70) und Empfangs-Kontrollnachricht (80), und zur Erstellung einer entsprechenden Überwachungsnachricht (90) und
- einer Ausgabeeinheit (62) zur Ausgabe der Überwachungsnachricht (90).

12. Überwachungseinheit (60) nach Anspruch 11,
ferner mit einer Speichereinheit (63, 64) zur Speicherung von die Übermittlung von Datenpaketen betreffenden, vorbestimmten Regeln, in denen vorgegeben ist, welche Punkte von der Überwachungseinheit (60) anhand der Absende- und Empfangs-Kontrollnachrichten (70, 80) zu überwachen sind.

13. Verfahren zur Überwachung des Datenaustausches zwischen Anwendungssystemen (10-13) mit den Schritten:
- Empfang einer Absende-Kontrollnachricht (70) von einem ersten Anwendungssystem (10) nach Absendung eines Datenpakets von dem ersten Anwendungssystem (10) an ein zweites Anwendungssystem (13),
- Prüfung einer von dem zweiten Anwendungssystem (13) nach erfolgreichem Empfang des Datenpakets erstellten Empfangs-Kontrollnachricht (80),
- Prüfung, ob das Datenpaket von dem zweiten Anwendungssystem (13) erfolgreich und innerhalb einer vorbestimmten Transaktionszeit empfangen wurde, anhand der Absende-Kontrollnachricht (70) und Empfangs-Kontrollnachricht (80),
- Erstellung einer entsprechenden Überwachungsnachricht (90) und
- Ausgabe der Überwachungsnachricht (90).

14. Computerprogramm mit Computerprogrammmitteln zur Veranlassung eines Computers, die Schritte des Verfahrens nach Anspruch 13 auszuführen, wenn das Computerprogramm auf einem Computer ausgeführt wird.

## Claims

1. Method for monitoring the exchange of data between application systems (10 - 13) including the steps:
- transmitting a dispatch control message (70) from a first application system (10) to a separate monitoring unit (60) after dispatch of a data packet from the first application system (10) to a second application system (13),
- creating a reception control message (80) from the second application system (13) after successful reception of the data packet by the second application system (13) and
- outputting a monitoring message (90) from the monitoring unit (60) containing information as to whether the data packet was received by the second application system (13) successfully and within a predetermined transaction time.

2. Method according to claim 1, **characterised in that** the first and second application systems (10, 13) are not directly connected to each other but are indirectly connected to each other, in particular by way of at least one further application system (11, 12) and/or transmission system.

3. Method according to claim 2, **characterised in that** the application and transmission systems (11, 12) connecting the first and second application systems (10, 13) also create reception and/or dispatch control messages after successful reception and dispatch respectively of the data packet and transmit said messages, in particular to the monitoring unit (60).

4. Method according to any one of the preceding claims, **characterised in that** the first and second application systems (10, 13) are different application systems and, in particular, use different data protocols.

5. Method according to any one of the preceding claims, **characterised in that** rules concerning the transmission of data packets are predetermined in the monitoring unit (60), in which rules it is specified which points are to be monitored by the monitoring unit (60) on the basis of the dispatch and reception control messages (70, 80).

6. Method according to claim 5, **characterised in that** measures to be taken for various kinds of data packets in the case of a negative result of points to be monitored, maximum transaction times, transmission paths and/or application systems from which control messages (70, 80) are expected are specified in the rules.

7. Method according to any one of the preceding claims, **characterised in that** the reception control messages (80) are transmitted from the second application system (13) to the monitoring unit (60).

8. Method according to any one of claims 1 to 7, **characterised in that** the reception control messages (80) are stored in the second application system (13) and the monitoring unit (60) periodically monitors the stored reception control messages (80).

9. Method according to any one of the preceding claims, **characterised in that** the monitoring message (90) is transmitted to the first application system (10), a service provider connected to the first application system (10) or a user of the first application system (10).

10. Monitoring system for monitoring the exchange of data between application systems (10 - 13) comprising:
- a first application system (10) for transmitting a dispatch control message (70) to a separate monitoring unit (60) after dispatch of a data packet from the first application system (10) to a second application system (13),
- a second application system (13) for creating a reception control message (80) after successful reception of the data packet and
- a monitoring unit (60) for outputting a monitoring message (90) containing information as to whether the data packet was received by the second application system (13) successfully and within a predetermined transaction time.

11. Monitoring unit (60) for use in a monitoring system according to claim 10 comprising:
- a reception unit (61) for receiving a dispatch control message (70) from a first application system (10) after dispatch of a data packet from the first application system (10) to a second application system (13),
- a checking unit (62) for checking a reception control message (80) created by the second application system (13) after successful reception of the data packet,
- a processing unit (62) for checking whether the data packet was received by the second application system (13) successfully and within a predetermined transaction time, on the basis of the dispatch control message (70) and reception control message (80), and for creating a corresponding monitoring message (90) and
- an output unit (62) for outputting the monitoring message (90).

12. Monitoring unit (60) according to claim 11, further comprising a storage unit (63, 64) for storing predetermined rules which relate to the transmission of data packets and in which it is defined which points are to be monitored by the monitoring unit (60) on the basis of the dispatch and reception control messages (70, 80).

13. Method for monitoring the exchange of data between application systems (10 - 13) including the steps:
- receiving a dispatch control message (70) from a first application system (10) after dispatch of a data packet from the first application system (10) to a second application system (13),
- checking a reception control message (80) created by the second application system (13) after successful reception of the data packet,
- checking whether the data packet was received by the second application system (13) successfully and within a predetermined transaction time on the basis of the dispatch control message (70) and reception control message (80),
- creating a corresponding monitoring message (90) and
- outputting the monitoring message (90).

14. Computer program with computer program means for causing a computer to execute the steps of the method according to claim 13 when the computer program is executed on a computer.

## Revendications

1. Procédé de surveillance de l'échange de données entre des systèmes d'application (10-13) comportant les étapes :
- le transfert d'une information de contrôle d'envoi (70) d'un premier système d'application (10) à une unité de surveillance distincte (60) après envoi d'un paquet de données du premier système d'application (10) à un second système d'application (13),
- l'établissement d'une information de contrôle de réception (80) du second système d'application (13) après la réception réussie du paquet de données par le second système d'application (13) et
- la délivrance d'une information de surveillance (90) par l'unité de surveillance (60) contenant une information, si le paquet de données a été reçu avec succès et pendant un temps de transaction prédéterminé par le second système d'application (13).

2. Procédé selon la revendication 1, **caractérisé en ce que** les premier et second systèmes d'application (10, 13) ne sont pas reliés l'un à l'autre directement, mais sont reliés l'un à l'autre indirectement en particulier par l'intermédiaire d'au moins un autre système d'application (11, 12) et/ou système de transmission.

3. Procédé selon la revendication 2, **caractérisé en ce** les systèmes d'application et de transmission (11, 12) reliant les premier et second systèmes d'application (10, 13) établissent des informations de contrôle de réception et/ou d'envoi après réception ou envoi réussi du paquet de données et les transmettent à l'unité de surveillance (60).

4. Procédé selon l'une des revendications précédentes, **caractérisé en ce que** les premier et second systèmes d'application (10, 13) sont des systèmes d'application différents, utilisant en particulier différents protocoles de données.

5. Procédé selon l'une des revendications précédentes, **caractérisé en ce que**, dans l'unité de surveillance (60), des règles concernant la transmission de paquets de données sont prédéterminées, dans lesquelles il est stipulé quels points sont à surveiller par l'unité de surveillance (60) concernant les informations de contrôle d'envoi et de réception (70, 80).

6. Procédé selon la revendication 5, **caractérisé en ce que**, dans les règles sont déterminées les mesures à prendre pour différents types de paquets de données dans le cas d'un résultat négatif des points à surveiller, temps de transactions maximum, trajets de transmission et/ou systèmes d'application, dont on attend des informations de contrôle (70, 80) .

7. Procédé selon l'une des revendications précédentes, **caractérisé en ce que** les informations de contrôle de réception (80) sont transmises par le second système d'application (13) à l'unité de surveillance (60).

8. Procédé selon l'une des revendications 1 à 7, **caractérisé en ce que** les informations de contrôle de réception (80) sont mémorisées dans le second système d'application (13) et l'unité de surveillance (60) surveille périodiquement les informations de contrôle de réception mémorisées (80).

9. Procédé selon l'une des revendications précédentes, **caractérisé en ce que** l'information de surveillance (90) est transmise au premier système d'application (10), un fournisseur de services relié au premier système d'application (10) ou à un utilisateur du premier système d'application (10).

10. Système de surveillance pour surveiller l'échange de données entre des systèmes d'application (10-13) comportant :
- un premier système d'application (10) pour transmettre une information de contrôle d'envoi (70) à une unité de surveillance distincte (60) après envoi d'un paquet de données du premier système d'application (10) à un second système d'application (13),
- un second système d'application (13) pour établir une information de contrôle de réception (80) après réception réussie du paquet de données, et
- une unité de surveillance pour délivrer une information de surveillance (90) contenant une information, si le paquet de données a été reçu avec succès et pendant un temps de transaction prédéterminé par le second système d'application (13).

11. Unité de surveillance (60) utilisée dans un système de surveillance selon la revendication 10 comportant:
- une unité de réception (61) pour recevoir une information de contrôle d'envoi (70) par un premier système d'application (10) après envoi d'un paquet de données par le premier système d'application (10) à un second système d'application (13),
- une unité de vérification (62) pour vérifier une information de contrôle de réception (80) établie par le second système d'application (13) après réception réussie du paquet de données,
- une unité de traitement (62) pour vérifier si le paquet de données a été reçu avec succès et pendant un temps de transaction prédéterminé par le second système d'application (13), en regard de l'information de contrôle d'envoi (70) et de l'information de contrôle de réception (80), et pour établir une information de surveillance correspondante (90), et
- une unité de délivrance (62) pour délivrer l'information de surveillance (90).

12. Unité de surveillance (60) selon la revendication 11, comportant en outre une unité de mémoire (63, 64) pour mémoriser les règles prédéterminées concernant la transmission de paquets de données, dans lesquelles il est stipulé quels points sont à surveiller par l'unité de surveillance en regard des informations de contrôle d'envoi et de réception (70, 80).

13. Procédé de surveillance de l'échange de données entre des systèmes d'application (10-13) comportant les étapes :
- réception d'une information de contrôle d'envoi (70) par un premier système d'application (10) après envoi d'un paquet de données par le premier système d'application (10) au second système d'application (13),
- vérification d'une information de contrôle de réception (80) établie par les second système d'application (13) après réception réussie du paquet de données,
- vérification si le paquet de données a été reçu avec succès et pendant une temps de transaction prédéterminée par le second système d'application (13), en regard de l'information de contrôle d'envoi (70) et de l'information de contrôle de réception (80),
- établissement d'une information de surveillance correspondante (90), et
- délivrance de l'information de surveillance (90) .

14. Programme information comportant des moyens de programme information pour amener un ordinateur, à exécuter les étapes du procédé selon la revendication 13, lorsque le programme informatique est effectué sur un ordinateur.
